# EUROPÄISCHE PATENTSCHRIFT

(11) **EP 0 552 446 B1**
(45) Veröffentlichungstag und Bekanntmachung des Hinweises auf die Patenterteilung: **09.08.1995**
(21) Anmeldenummer: 92120612.4
(22) Anmeldetag: 03.12.1992
(51) Int. Cl.: B60K 5/04

(54) **Omnibus, insbesondere Niedrigstflurbus**
Bus, especially low floor bus
Autobus, particulièrement autobus à plancher bas

(30) Priorität: 21.01.1992 DE 4201513
(43) Veröffentlichungstag der Anmeldung: 28.07.1993
(73) Patentinhaber: MAN Nutzfahrzeuge Aktiengesellschaft, 80976 München (DE)
(72) Erfinder: Hagin, Faust, Dipl.-Ing., W-8000 München 2 (DE); Drewitz, Hans, Dipl.-Ing. (FH), W-8000 München 40 (DE)

(56) Entgegenhaltungen:
- FR-A- 933 848
- GB-A- 669 150
- US-A- 2 037 464
- US-A- 2 077 130
- US-A- 2 118 811
- 'Prospekt "DAB Servicebus"' , DAB-SILKEBORG A/S , D[NMARK

## Beschreibung

Die Erfindung betrifft einen Omnibus, insbesondere Niedrigstflurbus, mit Merkmalen entsprechend dem Oberbegriff des Anspruchs 1.

Die Erfindung geht aus von dem nächstliegenden Stand der Technik, nämlich einem Niedrigstflurbus, wie er aus einem Prospekt der dänischen Firma DAB-Silkeborg a/s unter dem Titel "DAB Servicebus" hervorgeht. Der dort hinsichtlich verschiedener Details bildhaft dargestellte und partiell beschriebene Niedrigstflurbus weist lenkbare Vorderräder im vordersten Bereich des Busses und angetriebene Räder im hintersten Bereich des Busses sowie einen ebenen Boden im Bereich zwischen vorderen und hinteren Einstiegstüren auf. Als Antriebsquelle ist ein Diesel-, Gas- oder Benzinmotor vorgesehen, der über Hydrostaten die Hinterräder antreibt. Der Motor ist räumlich im Bereich zwischen den Hinterrädern angeordnet und zusammen mit diesen als sogenanntes Power-Pack völlig aus dem Bus nach hinten heraus für Wartungs- oder Reparaturzwecke ausfahrbar. Diese Lösung ist Zwar extrem platzsparend, aufgrund der hydrostatischen Kraftübertragung ergibt sich jedoch ein schlechter Wirkungsgrad im Triebstrang und ein relativ hoher Lärmpegel.

Es ist daher Aufgabe der Erfindung, einen Omnibus der eingangs genannten Art, was die Art des Antriebsaggregates und des Hinterradantriebes anbelangt, so auszugestalten, daß sich ein Busantrieb mit günstigem Wirkungsgrad und umweltverträglicher Lärmentwicklung ergibt.

Diese Aufgabe ist erfindungsgemäß bei einem Omnibus der gattungsgemäßen Art durch die im Anspruch 1 angegebenen Kombinationsmerkmale gelöst.

Vorteilhafte Ausgestaltungen bzw. Ausführungsformen dieser Lösung sind in den Unteransprüchen angegeben.

Ein Hauptvorteil des erfindungsgemäßen Konzeptes ist darin begründet, daß sowohl für die Vorderachse als auch die Hinterachse jene verwendet werden können, die bisher bei herkömmlichen Omnibussen und/oder Lastkraftwagen Verwendung fanden. Solche Achsen sind vergleichsweise billig, Änderungen sind demgegenüber lediglich im Bereich der Achsaufhängung und -führung notwendig. Hierfür kann ebenfalls auf vorhandene Konstruktionsprinzipien zurückgegriffen werden. Auch als Antriebsaggregat kann mit Vorteil ein solches verwendet werden, wie bei bislang bekannten Omnibussen. Entsprechende Anpassungsmaßnahmen sind dabei aber durch die erfindungsgemäße Verbindung zwischen Getriebe und Hinterachsdifferential durchzuführen. Die Anordnung des Antriebsaggregates knapp oberhalb der Hinterachse ist extrem platzsparend und auch für Wartungszwecke sehr günstig. Außerdem läßt sich ein solches, vergleichsweise leises Antriebsaggregat auch mit einem Wirkungsgrad betreiben, der erheblich über jenem des bekannten, eingangs genannten hydrostatischen Antriebskonzeptes liegt.

Nachstehend ist die Erfindung anhand eines in der Zeichnung dargestellten Ausführungsbeispieles noch näher erläutert. In der Zeichnung zeigen:

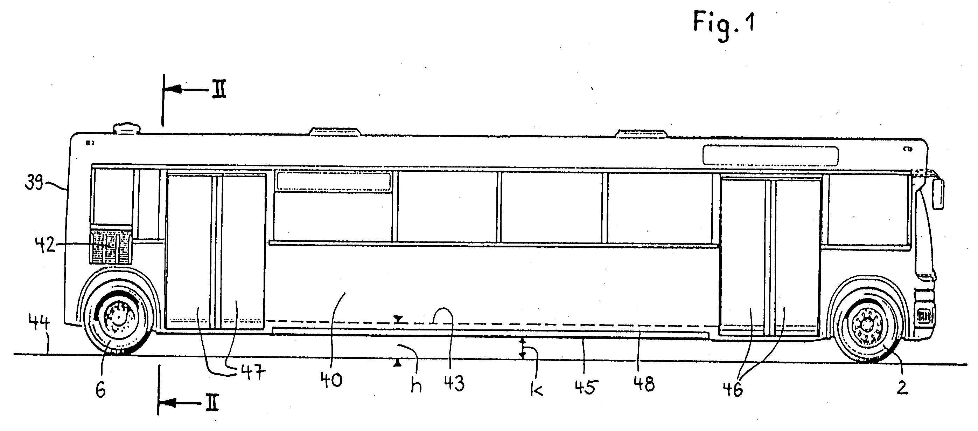

- Fig. 1: einen erfindungsgemäßen Omnibus in Seitenansicht,
- Fig. 2: einen Querschnitt durch den Omnibus gemäß Fig. 1 entlang Linie II-II,
- Fig. 3: einen vergrößerten Schnitt durch die Darstellung gemäß Fig. 2 entlang der dortigen Schnittlinie III - III.

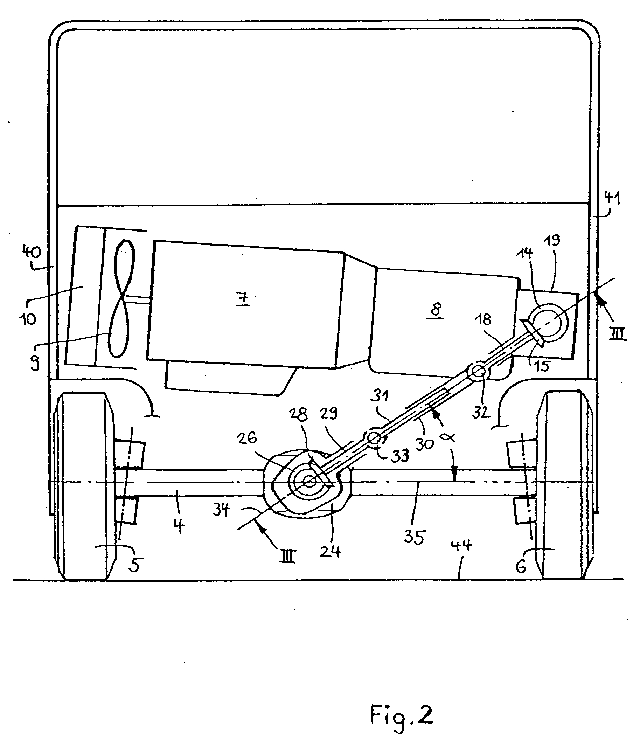

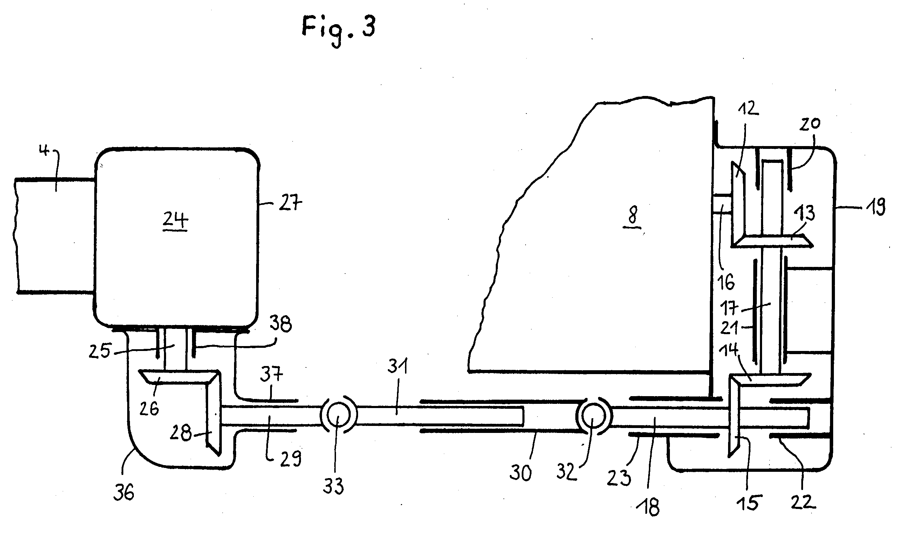

Der dargestellte Omnibus ist als Niedrigstfluromnibus konzipiert. Er weist lenkbare Vorderräder 2 in seinem vordersten Abschnitt und eine angetriebene starre Hinterachse 4 in seinem hintersten Abschnitt auf, die ebenfalls lenkbare Räder 5, 6 trägt. Die Räder 2, 5, 6 sind vorzugsweise alle einzelbereift. Die Vorderräder 2 sind vorzugsweise an einer starren Vorderachse angeordnet, können aber auch einzeln aufgehängt sein. Gleiches gilt auch für die Hinterräder 5, 6. Außerdem hat der Omnibus ein Antriebsaggregat, das aus einem Motor 7 und einem Getriebe 8 besteht. Der Motor 7 ist in Achsrichtung gesehen in Reihe mit dem Getriebe 8 angeordnet. Vorzugsweise, aber nicht notwendigerweise, sind auch ein Lüfter 9 und ein Kühleraggregat 10 in Reihe mit Getriebe 8 und Motor 7, vor diesem, angeordnet. Das Antriebsaggregat 7, 8 ist quer im omnibusheck oberhalb der Hinterachse 4, so nahe wie möglich zu dieser hingerückt, eingebaut. Dabei kann dessen Lage in Achsrichtung gesehen parallel zur Hinterachse 4 oder - wie dargestellt - leicht schräg zur Hinterachse 4 verlaufend sein. Der Motor 7 kann stehend oder liegend angeordnet sein. Der Abtrieb des Getriebes 8 erfolgt über einen seitlichen Kegelabtrieb, der stirnseitig oder an der Vorder- oder Rückseite des Getriebes 8 gegebensein kann. Im dargestellten Ausführungsbeispiel ist der stirnseitig gegenüber dem Motor 7 am Getriebe 8 gegebene Abtrieb des letzteren durch einen U-förmigen, über vier Kegelräder 12, 13, 14, 15 (siehe insbesondere Fig. 3) gebildeten Doppel-Winkelabtrieb gegeben. Dabei ist der eine U-Schenkel durch die an ihrem äußeren freien Ende das Kegelrad 12 tragende Getriebeausgangswelle 16, der U-Steg durch eine Längswelle 17, die das mit dem Kegelrad 12 kämmende Kegelrad 13 und axial beabstandet davon das mit dem Kegelrad 15 kämmende Kegelrad 14 trägt, und der andere U-Schenkel durch eine Abtriebswelle 18 gebildet, die das Kegelrad 15 trägt. Die Abtriebswelle 18 des Doppel-Winkelabtriebes verläuft entweder knapp hinter oder (wie im dargestellten Beispiel) knapp vor dem Getriebe 8, dieses - wie aus Fig. 2 ersichtlich - schräg nach unten zum Hinterachs-Differential 24 hin gerichtet überquerend. Der Doppel-Winkelabtrieb ist mit seinen Teilen in einem Gehäuse 19 untergebracht, das im dargestellten Fall stirnseitig am Getriebe 8 angeflanscht ist und diverse Lagerstellen 20, 21, 22, 23 für die Lagerung der Wellen 17, 18 aufweist.

Die Krafteinleitung in das Hinterachs-Differential 24 erfolgt von vorne (wie dargestellt) oder von hinten her über einen Kegelrad-Winkeltrieb, dessen erstes Kegelrad 26 am äußeren freien Ende der von vorne oder hinten her in das Differentialgehäuse 27 hineingeführten Längswelle 25 angeordnet ist und mit einem zweiten Kegelrad 28 kämmt, das endseitig an der schräg nach oben gerichteten Eingangswelle 29 des Kegelrad-Winkeltriebes angeordnet ist. Die Eingangswelle 29 ist so angeordnet, daß sie zur Abtriebswelle 18 des getriebeseitigen Kegelabtriebes zumindest annähernd fluchtet. Außerdem ist die Eingangswelle 29 mit der Abtriebswelle 18 über eine zweiteilige, längenvariable Kardanwelle verbunden. Deren beide Teile sind mit 30, 31 und die beiden endseitigen Kardangelenke mit 32, 33 bezeichnet.

Die durch die Abtriebswelle 18, Kardanwelle 30, 31 und Eingangswelle 29 gehende Längsmittelachse 34 steht - in Bus-Längsrichtung gesehen -in einem Winkel α ≧ 20° zur Hinterachs-Längsachse 35.

Die Teile des Kegelrad-Winkelabtriebes sind in einem Gehäuse 36 untergebracht, das - je nach Fall vorne oder hinten - am Differentialgehäuse 27 angeflanscht ist und Lagerstellen 37, 38 für die Wellen 29, 25 aufweist. Sofern die Hinterachse 4 oder das Differential 24 durch eine Neukonstruktion gebildet wird, kann das Gehäuse 36 auch mit dem Differential-Gehäuse 27 vereinigt, d.h., nur ein Gehäuse für Differential 24 und Kegelrad-Winkeltrieb vorgesehen sein.

Das Antriebsaggregat 7, 8 ist für Wartungszwecke von der Rückwand 39 des Omnibusses her durch Öffnen einer oder mehrerer nach oben schwenkbarer Klappen oder zweier seitlich ausschwenkbarer Hecktüren zugänglich. In besonders günstiger Ausführungsform ist das gesamte Antriebsaggregat auf einem Traggestell montiert und über dieses für Wartungszwecke oder Reparaturen aus dem Omnibusheck auszieh- bzw. ausfahrbar, bleibt jedoch vorzugsweise mit dem Omnibus verbunden.

Zum Fahrgastraum hin ist das Antriebsaggregat 7, 8 durch eine schall- und wärmedämmende Trennwand abgeschottet. Außerdem ist im Bereich jener (40) der beiden Seitenwände 40, 41 des Omnibusses, hinter der das Kühleraggregat 10 angeordnet ist, im Bereich vor diesem eine mit Luftdurchtrittsschlitzen versehene, zur Seite oder nach oben hin ausschwenkbare Klappe bzw. Tür 42 vorgesehen.

Generell weist der Omnibus einen auf die lenkbaren Hinterräder 5, 6 einwirkenden, nicht dargestellten Lenkmechanismus mit entsprechender Steuereinrichtung auf, durch deren Befehle die Hinterräder 5, 6 sowohl gleichsinnig (z.B. für exaktes Ein- und Ausfahren in/aus Haltestellenbuchten) als auch gegensinnig (für exaktes Durchfahren enger Kurven) zum Lenkeinschlag der Vorderräder 1, 2 lenkbar sind.

Ferner weist der Omnibus einen Fußboden 43, der - zur Vermeidung von Einstiegstufen - eine Höhe h von ca. 340 mm über Fahrbahn 44 hat, sowie eine Karosserie mit Seitenwänden 40, 41 auf, deren Unterkanten 45 einen Abstand k zur Fahrbahn 44 von ca. 240 mm oder weniger haben.

Der Fußboden 43 ist zwischen den Einstiegen 46, 47 durchgehend eben. Aufgrund des großen Achsabstandes und des entsprechend großen Abstandes zwischen vorderem Einstieg 46 und hinterem Einstieg 47 (jeweils zwei schwenkbare Türen) sowie aus Sicherheits- und Ästhetik-Gründen erweist es sich als zweckmäßig, den unteren Teil der beiden Seitenwände 40, 41, insbesondere zwischen den Einstiegen 46, 47 durch eine Schürze 48 aus biegsamem Material, z.B. Hartgummi, auszubilden.

Außerdem kann der Omnibus mit einer Luftfederung für Vorder- und Hinterachse ausgestattet sein, der ein Druckluftsystem mit einstiegtürenseitiger Absenkvorrichtung zugeordnet sein kann, die ein "kneeling" um ca. 100 mm ermöglicht. Auf diese Weise ergäbe sich bei voll abgesenktem Bus im Bereich der Einstiegtüren 46, 47 nur noch eine Einstieghöhe von ca. 140 mm über Fahrbahn 44, entsprechend etwa der Höhe einer normalen Bordsteinkante, was das Vorsehen von Kinderwagen- oder Rollstuhleinfahrrampen oder liftbare Einstiegsplateaus unnötig macht.

## Patentansprüche

1. Omnibus, insbesondere Niedrigstflurbus, mit lenkbaren Vorderrädern (2) und angetriebenen, ebenfalls lenkbaren Hinterrädern (5, 6) im hintersten Abschnitt des Busses, die von einem in deren Bereich angeordneten Antriebsaggregat aus antreibbar sind, gekennzeichnet durch die Kombination mit folgenden Merkmalen:
a) das Antriebsaggregat besteht aus einem Motor (7) und einem in Achsrichtung gesehen in Reihe mit diesem angeordneten Getriebe(8),
b) das Antriebsaggregat (7, 8) ist quer im Omnibus-Heck oberhalb einer Hinterachse (4) eingebaut,
c) der Abtrieb des getriebes (8) erfolgt über einen seitlichen Kegelradtrieb mit schräg nach unten gehender Abtriebswelle (18),
d) die Krafteinleitung in ein an der Hinterachse gegebenes Differential (24) erfolgt von vorne oder hinten her über einen Kegelrad-Winkeltrieb (26, 28), dessen Eingangswelle (29) zur Abtriebswelle (18) des getriebeseitigen Kegelradtriebes zumindest annähernd fluchtet und mit dieser über eine zweiteilige, längenvariable Kardanwelle (30, 31) verbunden ist, und
e) die durch Abtriebswelle (18), Kardanwelle (30, 31) und Eingangswelle (29) gehende Längsmittelachse (34) steht in einem Winkel α ≧ 20° zur Hinterachs-Längsachse (35).

2. Omnibus nach Anspruch 1, dadurch gekennzeichnet, daß das Antriebsaggregat (7, 8) in Achsrichtung gesehen parallel zur Hinterachse (4) angeordnet ist.

3. Omnibus nach Anspruch 1, dadurch gekennzeichnet, daß das Antriebsaggregat (7, 8) in Achsrichtung gesehen leicht schräg zur Hinterachse (4), mit dieser einen spitzen Winkel ≦ 10° einschließend, angeordnet ist.

4. Omnibus nach Anspruch 1, dadurch gekennzeichnet, daß auch ein Lüfter (9) und ein Kühleraggregat (10) in Reihe mit Getriebe (8) und Motor (7) vor letzterem angeordnet ist.

5. Omnibus nach Anspruch 1, dadurch gekennzeichnet, daß der Abtrieb des Getriebes (8) an dessen dem Motor (7) gegenüberliegender Stirnseite durch einen U-förmigen, über vier Kegelräder (12, 13, 14, 15) gebildeten Doppel-Winkelabtrieb gegeben ist, wobei der eine U-Schenkel des Doppel-Winkelabtriebes durch die Getriebeausgangswelle (16), der U-Steg durch eine Längswelle (17) und der andere U-Schenkel durch die Abtriebswelle (18) gebildet ist, die vor oder hinter dem Getriebe (8) schräg nach unten zur Eingangswelle (29) des Kegelrad-Winkeltriebes am Hinterachs-Differential (24) hin gerichtet ist.

6. Omnibus nach Anspruch 5, dadurch gekennzeichnet, daß am äußeren freien, aus dem Getriebe (8) herausragenden Ende der Getriebeausgangswelle (16) ein Kegelrad (12) angeordnet ist, das mit einem auf der Längswelle (17) sitzenden Kegelrad (13) kämmt, daß beabstandet vom Kegelrad (13) auf der Längswelle (17) ein zweites Kegelrad (14) sitzt, das mit einem auf der Abtriebswelle (18) sitzenden Kegelrad (15) kämmt.

7. Omnibus nach Anspruch 6, dadurch gekennzeichnet, daß die Teile des Doppel-Winkelabtriebes in einem Gehäuse (19) untergebracht sind, das stirnseitig am Getriebe (8) angeflanscht ist und diverse Lagerstellen (20, 21, 22, 23) für die Lagerung der Wellen (17, 18) aufweist.

8. Omnibus nach Anspruch 1, dadurch gekennzeichnet, daß der Kegelrad-Winkeltrieb aus einem ersten Kegelrad (26), das am äußeren freien Ende einer von vorne her in das Gehäuse (27) des Differentials (24) hineingefuhrten Längswelle (25) sitzt, und einem mit dem ersten Kegelrad (26) kämmenden zweiten Kegelrad (28) besteht, das auf der schräg nach oben gerichteten Eingangswelle (29) an deren unterem freien Ende sitzt.

9. Omnibus nach Anspruch 8, dadurch gekennzeichnet, daß die Teile des Kegelrad-Winkeltriebes in einem Gehäuse (36) untergebracht sind, das am Differentialgehäuse (27) angeflanscht ist und Lagerstellen (37, 38) für die Wellen (29, 25) aufweist.

10. Omnibus nach Anspruch 1, dadurch gekennzeichnet, daß das Antriebsaggregat (7, 8) von der Rückwand (39) des Omnibusses her durch Öffnen einer oder mehrerer nach oben schwenkbarer Klappen bzw. zweier seitlich ausschwenkbarer Türen für Wartungs- oder Reparaturarbeiten zugänglich ist.

11. Omnibus nach Anspruch 10, dadurch gekennzeichnet, daß das Antriebsaggregat auf einem fahrbaren Gestell montiert und über dieses für Wartungs- oder Reparaturarbeiten aus dem Omnibusheck auszieh- bzw. ausfahrbar ist, vorzugsweise jedoch mit dem Omnibus verbunden bleibt.

## Claims

1. Bus, particularly a lowest-floor bus, with steerable front wheels (2) and driven, also steerable rear wheels (5, 6) that are located in the rearmost section of the bus and can be driven from a drive unit located in their area, characterised by the combination with the following features:
a) the drive unit consists of an engine (7) and a gearbox (8) arranged in series with the said engine relative to the direction of the axis,
b) the drive unit (7, 8) is installed in transverse direction in the rear of the bus above a rear axle (4),
c) the output of the gearbox (8) is via a lateral bevel gear drive with an output shaft (18) positioned at a downward angle,
d) the power input into a differential (24) at the rear axle is effected from the front or the rear via a bevel gear angle drive (26, 28) whose input shaft (29) is in at least approximate alignment with the output shaft (18) of the bevel gear drive on the gearbox side and connected with the said output shaft (18) via a two-piece propshaft (30, 31) of variable length, and
e) the longitudinal centre axis (34) through the output shaft (18), propshaft (30, 31) and input shaft (29) forms an angle of α ≧ 20° relative to the longitudinal axis (35) of the rear axle.

2. Bus according to Claim 1, characterised in that the drive unit (7, 8) is, when viewed in the direction of the axis, arranged parallel to the rear axle (4).

3. Bus according to Claim 1, characterised in that the drive unit (7, 8) is, when viewed in the direction of the axis, arranged at a slightly oblique angle relative to the rear axle (4) and forms an acute angle of ≦ 10° with the said rear axle (4).

4. Bus according to Claim 1, characterised in that also a fan (9) and a cooling unit (10) are arranged in series with the gearbox (8) and the engine (7) before the latter.

5. Bus according to Claim 1, characterised in that the output of the gearbox (8) is located at that end of the said gearbox opposite the engine (7) in the form of a U-shaped double angle drive formed by four bevel gears (12, 13, 14, 15), the one U-side of the double angle drive being formed by the gearbox output shaft (16), the U-web by a longitudinal shaft (17) and the other U-side by the output shaft (18) which, before or behind the gearbox (8), points downwards at an oblique angle towards the input shaft (29) of the bevel gear angle drive at the rear axle differential (24).

6. Bus according to Claim 5, characterised in that a bevel gear (12) is mounted on the outer, free end of the gearbox output shaft (16) projecting from the gearbox (8), meshing with a bevel gear (13) mounted on the longitudinal shaft (17), that at a distance from the bevel gear (13) a second bevel gear (14) is mounted on the longitudinal shaft (17), meshing with a bevel gear (15) on the output shaft (18).

7. Bus according to Claim 6, characterised in that the parts of the double angle drive are located in a housing (19) whose front side is flanged on to the gearbox (8) and provided with various support points (20, 21, 22, 23) for supporting the shafts (17, 18).

8. Bus according to Claim 1, characterised in that the bevel gear angle drive consists of a first bevel gear (26) mounted on the outer free end of a longitudinal shaft (25) inserted from the front into the housing (27) of the differential (24), and a second bevel gear (28) meshing with the first bevel gear (26), which second bevel gear (28) is mounted on the lower free end of the input shaft (29) pointing upwards at an oblique angle.

9. Bus according to Claim 8, characterised in that the parts of the bevel gear angle drive are located in a housing (36) flanged on to the differential housing (27) and provided with supporting points (37, 38) for the shafts (29, 25).

10. Bus according to Claim 1, characterised in that the drive unit (7, 8) is accessible from the rear wall (39) of the bus for maintenance or repair jobs by opening one or several flaps that can be slewed upwards or two laterally slewable doors.

11. Bus according to Claim 10, characterised in that the drive unit is mounted on a movable rack on which it can be pulled and moved out of the rear of the bus for maintenance or repair work, but preferably remains connected with the bus.

## Revendications

1. Autobus, notamment autobus à plancher bas à roues avant (2) directrices et roues arrière (5, 6) motrices, également directrices, dans la partie la plus à l'arrière de l'autobus, roues qui sont entraînées par un groupe d'entraînement prévu à cet endroit, caractérisé par la combinaison des moyens suivants :
a) le groupe d'entraînement se compose d'un moteur (7) et d'une boîte de vitessess (8) en série avec le moteur dans la direction de l'axe,
b) le groupe d'entraînement (7, 8) est disposé transversalement à l'arrière de l'autobus, au-dessus d'un essieu arrière (4),
c) la sortie de la boîte de vitessess (8) se fait par une roue conique latérale avec un arbre de sortie (18) dirigé en biais vers le bas,
d) la force est induite dans le différentiel (24) de l'essieu arrière, à partir de l'avant ou de l'arrière, par un renvoi d'angle à roues coniques (26, 28) dont l'arbre d'entrée (29) est au moins approximativement aligné par rapport à l'arbre de sortie (18) de la roue conique du côté de la transmission, et est relié à celui-ci par au moins un arbre à cardans (30, 31) de longueur variable, en deux parties, et
e) l'axe géométrique longitudinal (34) passant par l'arbre de sortie (18), l'arbre à cardans (30, 31) et l'arbre d'entrée (29), fait un angle α ≧ 20° par rapport à l'axe longitudinal de l'essieu arrière 35.

2. Autobus selon la revendication 1, caractérisé en ce que le groupe d'entraînement (7, 8) se trouve dans la direction axiale, parallèle à l'essieu arrière (4).

3. Autobus selon la revendication 1, caractérisé en ce que le groupe d'entraînement (7, 8) est, lorsqu'on regarde dans la direction axiale, légèrement en biais par rapport à l'essieu arrière (4) en faisant avec celui-ci un angle aigu inférieur ou égal à 10°.

4. Autobus selon la revendication 1, caractérisé par un ventilateur (9) et un groupe de refroidissement (10) en série avec la transmission (8) et le moteur (7) et en avant de celui-ci.

5. Autobus selon la revendication 1, caractérisé en ce que la sortie de la boîte de vitessess (8) se fait par sa face frontale opposée à celle du moteur (7), par un double renvoi d'angle en forme de U et par quatre roues coniques (12, 13, 14, 15), une branche du U de ce double renvoi d'angle est formée par l'arbre de sortie (16) de la boîte de vitessess, la traverse de cette forme en U est constituée par un arbre longitudinal (17) et l'autre branche de la forme en U est formée par l'arbre de sortie (18) qui descend devant ou derrière la boîte de vitesses (8) en biais par rapport à l'arbre d'entrée (29) du renvoi d'angle conique, du différentiel (24) de l'essieu arrière.

6. Autobus selon la revendication 5, caractérisé en ce que l'extrémité extérieure libre de l'arbre de sortie (16) de la boîte de vitessess (8) porte une roue conique (12) engrenant avec une roue conique (13) portée par l'arbre longitudinal (17) et à une certaine distance de cette roue conique (13), et en ce que sur l'arbre longitudinal (17) il y a une seconde roue conique (14) engrenant avec une roue conique (15) portée par l'arbre de sortie (18).

7. Autobus selon la revendication 6, caractérisé en ce que les pièces de la sortie à double renvoi d'angle sont logées dans un carter (19) fixé frontalement contre la boîte de vitessess (8) et comportant différents paliers (20, 21, 22, 23) pour recevoir les arbres (17, 18).

8. Autobus selon la revendication 1, caractérisé en ce que le renvoi d'angle à roues coniques se compose d'une première roue conique (26) fixée à l'extrémité extérieure libre d'un axe longitudinal (25) pénétrant par l'avant dans le carter (27) du différentiel (24) et d'une seconde roue conique (28) engrenant avec cette première roue conique (26), cette seconde roue conique étant portée par l'extrémité inférieure libre de l'arbre d'entrée (29) incliné vers le haut.

9. Autobus selon la revendication 8, caractérisé en ce que les pièces du renvoi d'angle à roues coniques sont logées dans un carter (36) fixé au carter de différentiel (27) et comportant des paliers (37, 38) pour les arbres (29, 25).

10. Autobus selon la revendication 1, caractérisé en ce que le groupe d'entraînement (7, 8) est accessible par la paroi arrière (39) de l'autobus par l'ouverture d'un ou plusieurs volets relevables ou pivotants vers le côté, ou de deux portières qui pivotent latéralement, pour permettre d'effectuer les travaux d'entretien ou de réparation.

11. Autobus selon la revendication 10, caractérisé en ce que le groupe d'entraînement est monté sur un châssis mobile qui peut être extrait de l'arrière de l'autobus pour les travaux d'entretien ou de réparation, mais qui de préférence reste relié à l'autobus.
